# EUROPÄISCHE PATENTSCHRIFT

(11) **EP 0 638 748 B1**
(45) Veröffentlichungstag und Bekanntmachung des Hinweises auf die Patenterteilung: **04.06.1997**
(21) Anmeldenummer: 94110040.6
(22) Anmeldetag: 28.06.1994
(51) Int. Cl.: F16L 3/123, H02G 3/26, B60R 11/00, B60T 17/04

(54) **Haltevorrichtung**
Supporting device
Dispositif de serrage

(30) Priorität: 21.07.1993 DE 4324489
(43) Veröffentlichungstag der Anmeldung: 15.02.1995
(73) Patentinhaber: TRW United-Carr GmbH & Co. KG, D-67677 Enkenbach-Alsenborn (DE)
(72) Erfinder: Rückwardt, Hans-Werner, D-67307 Göllheim/Pfalz (DE)
(74) Vertreter: Eder, Eugen, Dipl.-Ing.

(56) Entgegenhaltungen:
- EP-A- 0 536 541
- DE-A- 3 206 261
- DE-B- 2 551 626
- GB-A- 806 988
- US-A- 3 015 869
- EP-A- 0 536 541
- DE-A- 3 206 261
- DE-B- 2 551 626
- GB-A- 806 988
- US-A- 3 015 869

## Beschreibung

Die Erfindung bezieht sich auf eine Haltevorrichtung nach dem Oberbegriff des Anspruchs 1.

Als Stand der Technik ist bereits eine derartige Haltevorrichtung aus Kunststoff bekannt (DE 39 33 305 A1), deren Haltebereich eine gewölbte, durch Flansche begrenzte Längsausnehmung aufweist. Um Rohre oder Kabel zu haltern, werden diese auf der Wölbung der Längsausnehmung aufgebracht und durch Bandelemente, welche die Außenseite der Längsausnehmung umschlingen, mit dem Halteelement verbunden. Es ergibt sich daraus ein gewisser Montageaufwand.

Weitere bekannte Halterungen (FR-PS 1 598 294, US-PS 3 213 500, FR-PS 1 121 357, FR-PS 1 585 813) weisen jeweils Halteelemente auf, welche Teil eines Hohlzylinders sind. Innerhalb dieses Teils haltern die Rohre, ohne gegen axiale Verschiebung gesichert zu sein.

Als allgemeiner Stand der Technik ist es darüber hinaus bereits bekannt, beispielsweise elektrische Leitungsstränge - vorwiegend in der Automobilindustrie - mit sogenannten Fixpunktklipsen zu versehen, welche die Funktion erfüllen, genau positionierte Befestigungspunkte zu schaffen. Die Befestigung dieser Klipse am Kabelstrang erfolgt durch eine Umwicklung des jeweiligen Klipses und des Kabelstranges mit einem Klebeband. Durch dieses Umwickeln entsteht eine gegen Verschieben gesicherte Verbindung des Befestigungselements auf dem Kabelstrang. Hieraus resultieren kostenintensive Arbeitsabläufe, welcher eine Automatisierung entgegenstehen. Der gesamte Arbeitsprozeß muß durch eine Bedienperson von Hand auf sogenannten Montagebrettern vorgenommen werden.

EP-A-0 536 541 zeigt eine formbare Folie zum Befestigen von Rohren oder elektrischen Leitungen auf einer Unterlage, wobei die Seite der Folie zum Befestigen auf der Unterlage mit einer klebfähigen Fläche versehen ist und im Bereich des Aufnahmeraumes der Rohre oder elektrischen Leitungen und mit denen verbindbar ein dritter klebfähiger Streifen vorgesehen ist.

Demgegenüber besteht die Aufgabe der vorliegenden Erfindung darin, eine Haltevorrichtung der eingangs genannten Art zu schaffen, welche schnell, einfach und kostensparend zu handhaben ist und eine Verbindung zwischen Leitungssträngen oder Rohren einerseits und einem Träger andererseits in verschiebegesicherter Form gewährleistet.

Diese Aufgabe wird erfindungsgemäß durch die Merkmale des Anspruchs 1 gelöst. Durch das Andrücken der Leitungsstränge oder eines Rohres gegen das Klebematerial des Halteelements wird während der Montage durch die Klebekraft von Beginn an eine gute Verschiebesicherung erzielt. Gleichzeitig wird der Leitungsstrang auf einfache Weise schnell und sicher mit dem Befestigungselement verbunden. Damit lassen sich sowohl elektrische Leitungen als auch steifere Kunststoff- oder Metallrohre auf kostensparende Weise mit einem Träger verbinden, und zwar unter Berücksichtigung der Schiebesicherung.

Ein weiterer Vorteil resultiert daraus, daß durch die Klebetechnik die Leitungen nicht mehr - wie bisher - einem permanenten Druck durch die eingesetzten Befestigungselemente ausgesetzt sind, was bisher zu einer Beschädigung der Leitungen führen konnte.

In weiterer Ausgestaltung der Erfindung kann das Klebematerial entweder direkt auf die den Leitungssträngen zugekehrte Seite des Halteelements aufgebracht sein oder als Klebeband eingesetzt werden.

Nach einem anderen erfindungsgemäßen Merkmal kann das Halteelement bandförmig ausgebildet und auf der den Leitungssträngen zugekehrten Seite mit dem Klebematerial versehen sein. Hierbei kann das Halteelement eine einstückig mit dem Befestigungselement ausgebildete Einheit darstellen oder das Halteelement kann selbst als Klebeband ausgebildet werden, wobei an dem Klebeband das Befestigungselement angeordnet ist.

Eine Alternativlösung besteht darin, daß das Halteelement Teil eines Hohlzylinders ist, an dessen als leitungsseitige Berührungsfläche ausgebildetem Innenumfang sich das Klebematerial befindet.

Das Befestigungselement kann in weiterer Ausgestaltung der Erfindung in einer Trägeröffnung oder an einem mit dem Träger verbundenen Bolzen befestigt werden. Hierbei kann das Befestigungselement ein als mit mindestens einem federnden Arm versehener Halteklip, als Halterung mit profilierter Innenaussparung oder als Profilbolzen ausgebildet sein. Ebenso denkbar ist eine Preß- oder Schraubverbindung oder eine klebende Befestigung auf einem Träger.

Die Erfindung wird nachfolgend anhand von in der Zeichnung dargestellten Ausführungsbeispielen näher beschrieben. In der Zeichnung zeigen:
- Fig. 1: eine Seitenansicht einer erfindungsgemäßen Haltevorrichtung;
- Fig. 2: eine Vorderansicht der Haltevorrichtung nach Fig. 1;
- Fig. 3: eine andere Ausführungsmöglichkeit der erfindungsgemäßen Haltevorrichtung mit geschnittenem Befestigungselement;
- Fig. 4: eine perspektivische Darstellung der Verbindung zwischen einem Leitungsstrang und einer Haltevorrichtung nach Fig. 1 und 2;
- Fig. 5 und 6: zwei weitere Ausführungsmöglichkeiten der erfindungsgemäßen Haltevorrichtung in Seitenansicht.

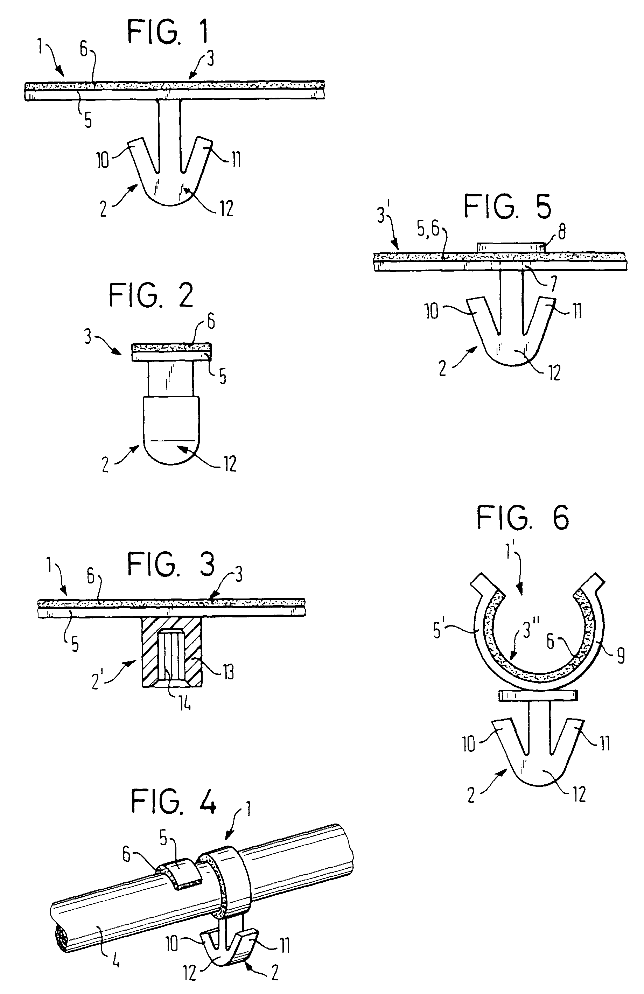

In Fig. 1 ist eine Haltevorrichtung 1 dargestellt, welche insbesondere für Leitungsstränge oder Rohre dient. Diese Haltevorrichtung 1 besteht im wesentlichen aus einem Befestigungselement 2 und einem die entsprechende Leitungsstränge umgreifenden Halteelement 3. Das Halteelement 3 ist bei der Ausführungsform nach Fig. 1 und 2 in Form einer flexiblen Lasche 5 ausgebildet, welche auf der den Leitungssträngen zugekehrten Seite mit einem Klebematerial 6 beschichtet ist. Hierbei kann das Klebematerial 6 direkt auf die flexible Lasche 5 aufgebracht sein.

Alternativ besteht auch die Möglichkeit, daß das Klebematerial 6 als doppelseitiges Klebeband auf die Lasche 5 aufgebracht wird. Nach Entfernen der entsprechenden Schichten haftet dann das Klebeband auf der Oberseite der flexiblen Lasche 5. Wird bei Durchführung der Montage die entsprechende oberseitige Abdichtschicht von dem Klebeband abgezogen, so kann dieses zusammen mit der flexiblen Lasche 5 um den entsprechenden Leitungsstrang herumgeschlungen werden.

Bei dem Ausführungsbeispiel nach Fig. 1 und 2 ist das Befestigungselement als Halteklip 12 ausgebildet, welcher mit zwei federnden Armen 10 und 11 versehen ist. Der Halteklip 12 mit den beiden federnden Armen 10 und 11 und die flexible Lasche 5 bilden hierbei eine einstückige, aus Kunststoff hergestellte Einheit.

Aus Fig. 3 geht hervor, daß das Befestigungselement 2 auch als Halterung 13 gestaltet sein kann, welches mit einer profilierten Innenaussparung 14 versehen ist. Die Halterung 13, welche das Befestigungselement 2' darstellt und die flexible Lasche 5 bilden wiederum eine einstückige Einheit, auf welcher das Klebematerial 6 aufgebracht ist.

In Fig. 4 ist in perspektivischer Darstellung die Verbindung zwischen der erfindungsgemäßen Haltevorrichtung 1 und Leitungssträngen 4 vorgesehen. Wie dargestellt, umschließt die flexible Lasche 5 die Leitungsstränge 4, wobei das Klebematerial 6 auf den Außenumfang der Leitungsstränge 4 haftet, so daß diese Einheit dann mit dem Befestigungselement 2 in eine nicht näher dargestellte Öffnung eines Trägers eingeklippt werden kann und darin verschiebesicher gehaltert ist. Die Enden der Lasche 5 können hierbei - wie dargestellt - nebeneinander liegen oder sich überdecken.

Bei der Ausführungsform nach Fig. 5 ist das Halteelement 3' selbst als Klebeband ausgebildet und weist eine Öffnung 7 auf. Durch diese Öffnung 7 kann das Befestigungselement 2 eingebracht werden, wobei dieses Befestigungselement 2 beispielsweise einen Befestigungsbereich 8 in Form eines Flansches aufweist. Dieser Flansch 8 haftet auf der Oberseite des Klebematerials 7, so daß auch hierdurch eine gute Verbindung der aus dem Befestigungselement 2 und dem Halteelement 3' bestehenden Haltevorrichtung 1 gewährleistet ist.

Die Höhe des Befestigungsbereichs 8, d.h. des Flansches, ist hierbei vorteilhafterweise so gering, daß beim Umschlingen der flexiblen Lasche 5 um den jeweiligen Leitungsstrang 4 dieser keine Beschädigung erfährt.

Wiederum besteht die Möglichkeit, analog den vorgenannten Ausführungsformen das Befestigungselement 2 beispielsweise als Halterung 13 mit profilierter Innenaussparung 14 entsprechend Bauform nach Fig. 3 einzusetzen, wobei diese Halterung 13 dann einen kleinen Zapfen mit entsprechendem Flansch zum Durchtritt durch die Öffnung 7 des Halteelements 3' aufweist.

Bei der Ausführungsform nach Fig. 6 ist das Halteelement 3'' Teil eines Hohlzylinders 9. An dessen, als leitungsseitige Berührungsfläche ausgebildeten Innenumfang befindet sich das Klebematerial 6. Diese Ausführungsform ist für genau definierte Durchmesser von elektrischen Leitungen oder auch von Kunststoff- oder Metallrohren gedacht, welche gegen Verschieben gesichert sein müssen. Statt des Befestigungselements 2 kann dieses auch in Form einer Halterung 13 analog Fig. 3 ausgestaltet sein.

Erfindungsgemäß wird eine Haltevorrichtung geschaffen, welche jeweils eine flexible Lasche 5 bzw. 5' aufweist, die beispielsweise mittels einer Montagevorrichtung einfach um den zu befestigenden Leitungsstrang 4 oder um das entsprechende Rohr geklebt werden kann. Hierdurch ergibt sich neben einer guten Halterung auch eine einwandfreie Verschiebesicherung.

## Patentansprüche

1. Haltevorrichtung für Leitungsstränge oder Rohre, mit einem die Leitungsstränge oder Rohre zumindest teilweise umgreifenden Halteelement (3, 3'), welches bandförmig ausgebildet und auf der den Leitungssträngen (4) oder Rohren zugekehrten Seite mit Klebematerial (6) versehen ist und ein Befestigungselement (2, 2') aufweist,
dadurch gekennzeichnet,
daß das Befestigungselement (2, 2') auf der den Leitungssträngen oder Rohren abgekehrten Seite angeordnet ist.

2. Haltevorrichtung nach Anspruch 1,
dadurch gekennzeichnet,
daß das Befestigungselement (2) über eine, das bandförmige Halteelement (3') durchsetzende Öffnung (7) mit diesem verbunden ist, wobei das Befestigungselement (2) einen mit der klebenden Seite des Klebebandes verbundenen Befestigungsbereich (8) aufweist.

3. Haltevorrichtung nach Anspruch 1 oder 2,
dadurch gekennzeichnet,
daß das Befestigungselement (2') als mit mindestens einem federnden Arm (10, 11) versehener Halteklip (12), als Halterung (13) mit profilierter Innenaussparung (14), als Profilbolzen oder als Preß- oder Schraubverbindung ausgebildet ist.

4. Haltevorrichtung nach Anspruch 1,
dadurch gekennzeichnet,
daß das Halteelement (3") Teil eines Hohlzylinders (9) ist, an dessen als leitungsseitige Berührungsfläche ausgebildetem Innenumfang sich das Klebematerial (6) befindet.

5. Haltevorrichtung nach einem oder mehreren der vorhergehenden Ansprüche,
dadurch gekennzeichnet,
daß das Halteelement (3, 3', 3") eine einstückig mit dem Befestigungselement (2, 2') ausgebildete Einheit ist.

## Claims

1. Retaining device for strings of conduits or pipes, having a retaining element (3, 3') which at least partially engages around the strings of conduits or pipes, is designed in the form of a band, is provided with adhesive material (6) on the side facing the strings of conduits (4) or pipes, and has a fastening element (2, 2'), characterized in that the fastening element (2, 2') is arranged on the side remote from the strings of conduits or pipes.

2. Retaining device according to Claim 1, characterized in that the fastening element (2) is connected to the band-like retaining element (3') via an opening (7) which passes through the latter, the fastening element (2) having a fastening region (8) which is connected to the adhesive side of the adhesive band.

3. Retaining device according to Claim 1 or 2, characterized in that the fastening element (2') is designed as a retaining clip (12) provided with at least one resilient arm (10, 11), as a retaining means (13) with a profiled inner recess (14), as a profiled bolt, or as a press or screw connection.

4. Retaining device according to Claim 1, characterized in that the retaining element (3") is part of a hollow cylinder (9) on whose inner circumference, which is designed as a conduit-side contact surface, the adhesive material (6) is located.

5. Retaining device according to one or more of the preceding claims, characterized in that the retaining element (3, 3', 3") is a unit which is formed integrally with the fastening element (2, 2').

## Revendications

1. Dispositif de retenue pour segments de conduits ou pour tuyaux, comportant un élément de retenue (3, 3') qui ceinture au moins partiellement les segments de conduits ou les tuyaux, est réalisé en forme de ruban, est muni d'un matériau adhésif (6) sur la face tournée vers les segments de conduits (4) ou les tuyaux, et présente un élément de fixation (2, 2'),
caractérisé par le fait
que l'élément de fixation (2, 2') est placé du côté tourné à l'opposé des segments de conduits ou des tuyaux.

2. Dispositif de retenue selon la revendication 1,
caractérisé par le fait
que l'élément de fixation (2) est relié à l'élément de retenue (3') en forme de ruban par l'intermédiaire d'un orifice (7) traversant ce dernier, l'élément de fixation (2) présentant une zone de fixation (8) reliée à la face adhésive du ruban adhésif.

3. Dispositif de retenue selon la revendication 1 ou 2,
caractérisé par le fait
que l'élément de fixation (2') est réalisé sous la forme d'un clip d'arrêt (12) présentant au moins un bras élastique (10, 11), d'une pièce d'arrêt (13) à évidement intérieur profilé (14), d'un tenon profilé ou d'une pièce de solidarisation par emmanchement ou par vissage.

4. Dispositif de retenue selon la revendication 1,
caractérisé par le fait
que l'élément de retenue (3") fait partie d'un cylindre creux (9) présentant le matériau adhésif (6) sur son pourtour intérieur réalisé sous la forme d'une surface de contact située côté conduit.

5. Dispositif de retenue selon l'une ou plusieurs des revendications précédentes,
caractérisé par le fait
que l'élément de retenue (3, 3', 3") est un ensemble unitaire réalisé d'un seul tenant avec l'élément de fixation (2, 2').
